# EUROPEAN PATENT APPLICATION

(11) **EP 4 550 239 A1**
(43) Date of publication of application: **07.05.2025**
(21) Application number: 23830693.0
(22) Date of filing: 05.01.2023
(51) Int. Cl.: G06Q 10/20

(54) **SOLAR POWER PLANT MANAGEMENT SYSTEM, ASSET MANAGEMENT PLATFORM, PROGRAM, MACHINE MANAGEMENT SYSTEM, AND INFORMATION PROCESSING METHOD**

(30) Priority: 28.06.2022 JP 2022103355
(71) Applicant: Ri, Hou, Fukuoka-shi, Fukuoka 810-0054 (JP)
(72) Inventor: Ri, Hou, Fukuoka-shi, Fukuoka 810-0054 (JP)
(74) Representative: Hasegawa, Kan
(86) International application number: PCT/JP2023/000094
(87) International publication number: WO 2024/004237

(57) **Abstract**

If the status survey and repair work for the photovoltaic equipment (52) cannot be handled by the asset management platform (10), the transmission unit (18) sends a request for information provision from the asset management platform (10) to the central platform (40), and the information about the maintenance companies capable of performing the work, which is stored in the database (44) of the central platform (40), can be accessed from the asset management platform (10).

## Description

### TECHNICAL FIELD

The present invention relates to a solar power plant management system, an asset management platform, a program, a machine management system, and an information processing method.

### BACKGROUND ART

Conventionally, as a monitoring platform for photovoltaic power generation systems, when a problem, such as a failure, occurs in the photovoltaic equipment (e.g., solar panels), a notification is sent to the user who owns the photovoltaic equipment. With such a monitoring platform, the user can be notified of any issues with the photovoltaic equipment even if they are far from the system, allowing them to request a maintenance company to perform a status inspection or carry out repairs. For example, a maintenance service provision system that matches dispatched personnel for performing inspection and repair work on photovoltaic equipment is disclosed in Japanese Patent No. 6893726, among others.

### SUMMARY OF THE INVENTION

In the conventional maintenance service provision system, such as that disclosed in Japanese Patent No. 6893726, when a maintenance company registered in the database of the asset management platform, which is set up for a solar power plant with photovoltaic equipment, is unable to perform the status survey or repair work for the photovoltaic equipment, the owner or manager of the photovoltaic equipment must contact maintenance companies outside the asset management platform's database on a case-by-case basis, which is time-consuming and labor-intensive.

The present invention was made with these considerations in mind. When the asset management platform is unable to handle the condition survey or repair work for the photovoltaic equipment, information regarding the request for information provision is sent from the asset management platform to the central platform via the transmission unit. The information about maintenance companies capable of performing the work, stored in the central platform's database, can be accessed from the asset management platform, thus eliminating the need to contact maintenance companies other than those stored in the asset management platform's memory, thereby improving convenience. The present invention aims to provide a solar power plant management system, an asset management platform, a program, and an information processing method. Another objective of the invention is to provide a machine management system that enhances convenience by eliminating the need to contact maintenance companies outside the asset management platform's memory. When the asset management platform is unable to handle the status survey or repair work for machine equipment, information about the request for information provision is sent from the asset management platform to the central platform via the transmission unit. The central platform's database, which contains information about maintenance companies capable of performing the work, can be accessed from the asset management platform, thus removing the need to contact maintenance companies other than those in the asset management platform's memory, thereby improving convenience.

A solar power plant management system of the present invention comprises:
a solar power plant having photovoltaic equipment;
an asset management platform provided in response to the solar power plant, the asset management platform including a controller functioning as a reception unit, an abnormality detection unit, and a transmission unit by executing a program, and a memory storing information about maintenance companies; and
a central platform that is communicatively connected to a plurality of the asset management platforms and has a maintenance company database; wherein
in the asset management platform, when the reception unit receives abnormality information regarding the photovoltaic equipment and the abnormality detection unit detects an abnormality in the photovoltaic equipment, it is determined whether the asset management platform can handle the status survey work for the photovoltaic equipment. If the asset management platform is unable to handle the status survey work for the photovoltaic equipment, information regarding the request for information provision from the asset management platform to the central platform is transmitted by the transmission unit, and information about the maintenance companies capable of performing the work, stored in the database of the central platform, can be confirmed from the asset management platform.

In the solar power plant management system of the present invention, when determining whether the asset management platform can handle the status survey work for the photovoltaic equipment, if the status survey work cannot be performed by the owner of the asset management platform or by the maintenance company stored in the memory, it may be determined that the asset management platform cannot handle the status survey work for the photovoltaic equipment.

Further, information regarding the recruitment of the status survey work for the photovoltaic equipment may be displayed on the website of the asset management platform, and on the website, the maintenance company to perform the status survey work is selected from among multiple maintenance companies.

Further, when the reception unit receives a report from the maintenance company that has conducted the status survey work, the content of the report may be displayed on the website of the asset management platform.

Further, in the solar power plant management system of the present invention, when it is determined that repair of the photovoltaic equipment is required on the asset management platform, it may be determined whether or not the asset management platform can handle the repair work for the photovoltaic equipment. If the asset management platform cannot handle the repair work, information regarding the request for information provision from the asset management platform to the central platform is transmitted via the transmission unit, and the information about maintenance companies that can perform the work, stored in the central platform's database, can be accessed from the asset management platform.

Further, in the solar power plant management system of the present invention, when determining whether the asset management platform can handle the repair work for the photovoltaic equipment, if the repair work cannot be performed by the owner of the asset management platform or by the maintenance company stored in the memory, it may be determined that the asset management platform is unable to handle the repair work for the photovoltaic equipment.

Further, in the solar power plant management system of the present invention, information about the recruitment of repair work for the photovoltaic equipment may be displayed on the asset management platform's website, and on said website, the maintenance company is selected from among multiple maintenance companies to perform the repair work.

Further, when the reception unit receives a report concerning the repair work from the maintenance company that performed the repair work, the content of the report may be displayed on the asset management platform's website.

A solar power plant management system of the present invention comprises:
a solar power plant having photovoltaic equipment;
an asset management platform provided in response to the solar power plant, the asset management platform including a controller functioning as a transmission unit by executing a program, and a memory storing information about maintenance companies;
a central platform that is connected to the plurality of the asset management platforms in a way that allows communication and has a maintenance company database; wherein
in the asset management platform, it is determined whether or not the repair work for the photovoltaic equipment can be handled by the asset management platform, if the repair work for the photovoltaic equipment cannot be handled by the asset management platform, information regarding the request for provision of information is transmitted from the asset management platform to the central platform by the transmission unit, and information regarding the maintenance companies that can perform the work, which is stored in the database of the central platform, can be accessed from the asset management platform.

An asset management platform of the present invention provided in correspondence with a solar power plant having photovoltaic equipment, comprises:
a controller configured to function as a reception unit, abnormality detection unit, and transmission unit by executing the program; and
a memory that stores information about maintenance companies; wherein
when the reception unit receives abnormal information about the photovoltaic equipment and the abnormality detection unit detects an abnormality in the photovoltaic equipment, it is determined whether the asset management platform can handle the task of investigating the status of the photovoltaic equipment. If the task cannot be handled by the asset management platform, information regarding the request for information provision from the asset management platform is transmitted to the central platform, which has the maintenance company database, via the transmission unit, and information about maintenance companies capable of performing the task, stored in the database of the central platform, can be checked from the asset management platform.

An asset management platform of the present invention provided in correspondence with a solar power plant that has photovoltaic equipment, comprising:
a controller configured to function as a transmission unit by executing the program; and
a memory that stores information about maintenance companies; wherein
the asset management platform determines whether or not the repair work for the photovoltaic equipment can be handled by the asset management platform, and if the repair work for the photovoltaic equipment cannot be handled by the asset management platform, the asset management platform sends information regarding the request for information provision to the central platform, which has the maintenance company database, via the transmission unit, and the information about maintenance companies that can perform the work, stored in the database of the central platform, can be checked from the asset management platform.

A program of the present invention is a program in which the controller of the asset management platform provided in correspondence with a solar power plant having photovoltaic equipment functions as a reception unit, an abnormality detection unit, and a transmission unit by being executed by the controller, and when the reception unit receives abnormal information about the photovoltaic equipment and the abnormality detection unit detects an abnormality in the photovoltaic equipment, it is determined whether or not the asset management platform can handle the status survey work for the photovoltaic equipment, and if the status survey work cannot be handled by the asset management platform, information regarding the request for information provision from the asset management platform is sent to the central platform, which has the maintenance company database, via the transmission unit, and information about maintenance companies that can perform the work, stored in the central platform's database, can be confirmed from the asset management platform.

A program of the present invention is a program program in which the controller of the asset management platform provided in response to a solar power plant with photovoltaic equipment, functions as a transmission unit by executing the controller, and it is determined whether the repair work for the photovoltaic equipment can be handled by the asset management platform, and if the repair work for the photovoltaic equipment cannot be handled by the asset management platform, information regarding the request for information provision is transmitted from the asset management platform to the central platform, which has the maintenance company database, via the transmission unit, and information about the maintenance companies that can perform the work, stored in the database of the central platform, can be confirmed from the asset management platform.

A machine management system of the present invention, comprises:
machine equipment;
an asset management platform provided in correspondence with the machine equipment, the asset management platform having a controller that functions as a reception unit, abnormality detection unit, and transmission unit by executing a program, and a memory that stores information about maintenance companies; and
a central platform that is communicatively connected to a plurality of the asset management platforms and has a maintenance company database; wherein
in the asset management platform, when the reception unit receives abnormal information about the machine equipment and the abnormality detection unit detects an abnormality in the machine equipment, it is determined whether or not the asset management platform can handle the investigation of the status of the machine equipment. If the asset management platform cannot handle the investigation work, the transmission unit sends information regarding the request for information provision from the asset management platform to the central platform, and the asset management platform can check the information about maintenance companies that can perform the work, which is stored in the database of the central platform.

A machine management system of the present invention, comprises:
machine equipment;
an asset management platform provided in correspondence with the machine equipment, which includes a controller that functions as a reception unit, abnormality detection unit, and transmission unit by executing a program, and a memory that stores information about maintenance companies; and
a central platform that is communicatively connected to the plurality of the asset management platforms and has a maintenance company database; wherein
it is determined whether or not the repair work for the machine equipment can be handled by the asset management platform. If the repair work for the machine equipment cannot be handled by the asset management platform, information regarding the request for information provision is transmitted from the asset management platform to the central platform via the transmission unit, and the information about the maintenance companies that can perform the work, stored in the database of the central platform, can be checked from the asset management platform.

An information processing method of the present invention is performed by a solar power plant management system comprising a solar power plant with photovoltaic equipment, an asset management platform corresponding to the solar power plant, which includes a controller functioning as a reception unit, abnormality detection unit, and transmission unit by executing a program, and a memory that stores information about maintenance companies, and a central platform communicatively connected to multiple asset management platforms and having a maintenance company database, and comprises:
determining whether the asset management platform can handle the task of investigating the status of the photovoltaic equipment when the reception unit receives abnormal information about the photovoltaic equipment and the abnormality detection unit detects an abnormality in the photovoltaic equipment;
if the asset management platform cannot handle the situation survey work for the photovoltaic equipment, transmitting information about the request for information provision from the asset management platform to the central platform via the transmission unit; and
checking information about maintenance companies that can perform the work, stored in the database of the central platform, from the asset management platform.

An information processing method of the present invention is performed by a solar power plant management system comprising a solar power plant with photovoltaic equipment, an asset management platform corresponding to the solar power plant, which includes a controller functioning as a transmission unit by executing a program, and a memory that stores information about maintenance companies, and a central platform communicatively connected to multiple asset management platforms and having a maintenance company database, and comprises:
determining whether or not the repair work for the photovoltaic equipment can be handled by the asset management platform;
if the repair work for the photovoltaic equipment cannot be handled by the asset management platform, transmitting information about a request for information provision from the asset management platform to the central platform via the transmission unit, and
checking the information about the maintenance companies that can perform the work, stored in the database of the central platform, from the asset management platform.

### BRIEF DESCRIPTION OF THE DRAWINGS

FIG. 1 is a block diagram illustrating the configuration of the solar power plant management system according to an embodiment of the present invention.
FIG. 2 is a flowchart illustrating the on-site survey process for the photovoltaic equipment installed in the solar power plant, as part of the solar power plant management system shown in FIG. 1.
FIG. 3 is a flowchart illustrating the on-site repair process for the photovoltaic equipment installed in the solar power plant, as part of the solar power plant management system shown in FIG. 1.
FIG. 4 is a flowchart illustrating the parts purchasing process in the solar power plant management system shown in FIG. 1.
FIG. 5 is a flowchart illustrating the search process to the central platform in the solar power plant management system shown in FIG. 1.

### DETAILED DESCRIPTION

### <Overview of the Solar Power Plant Management System>

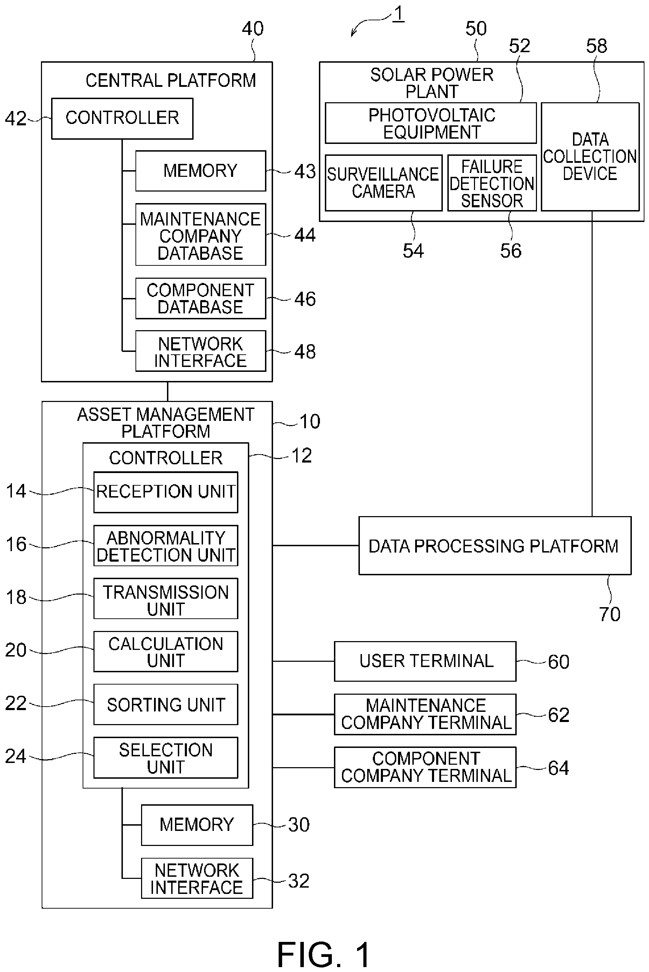

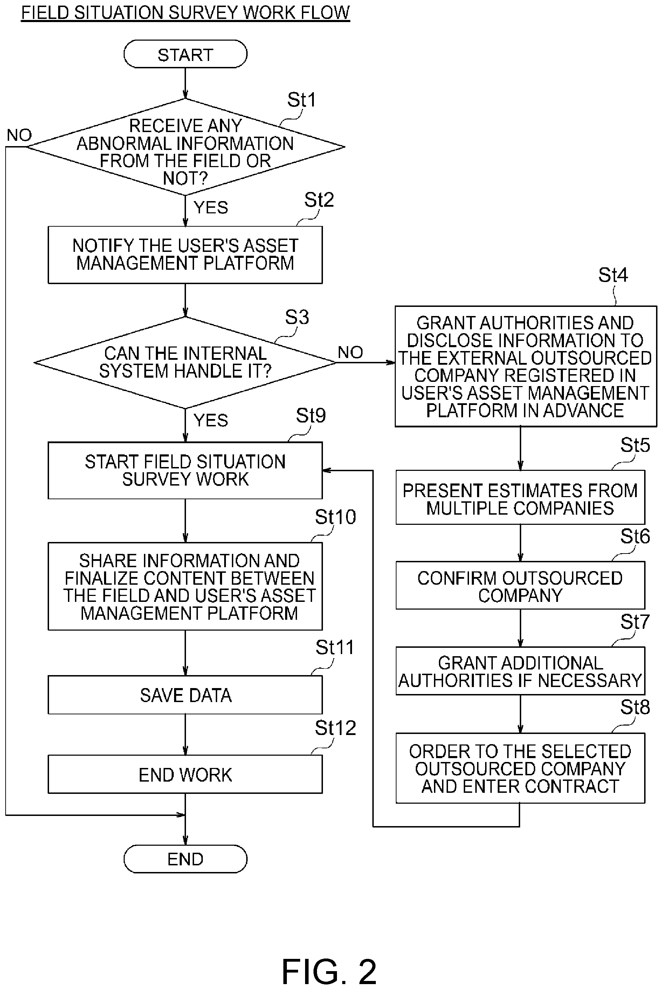

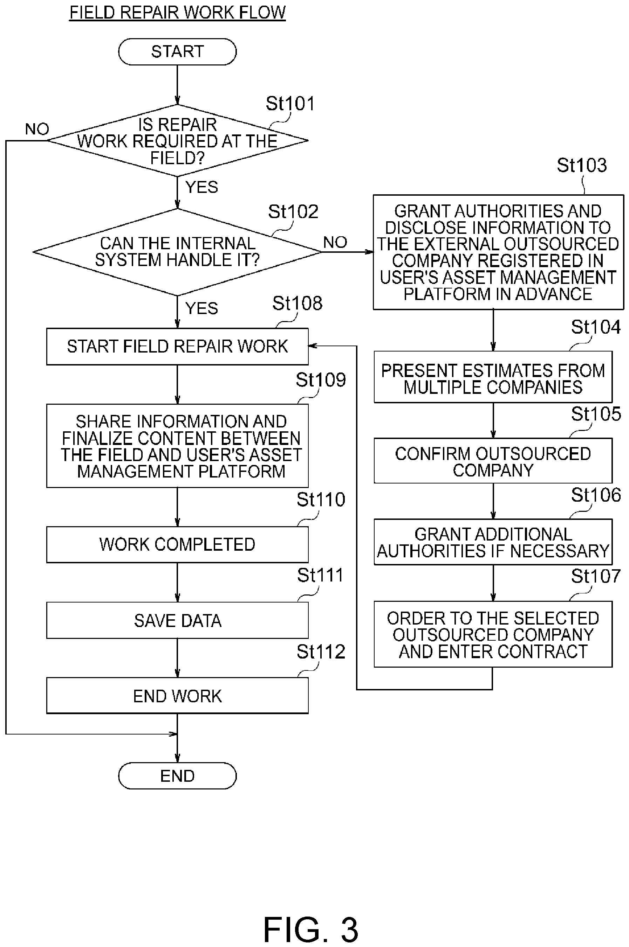

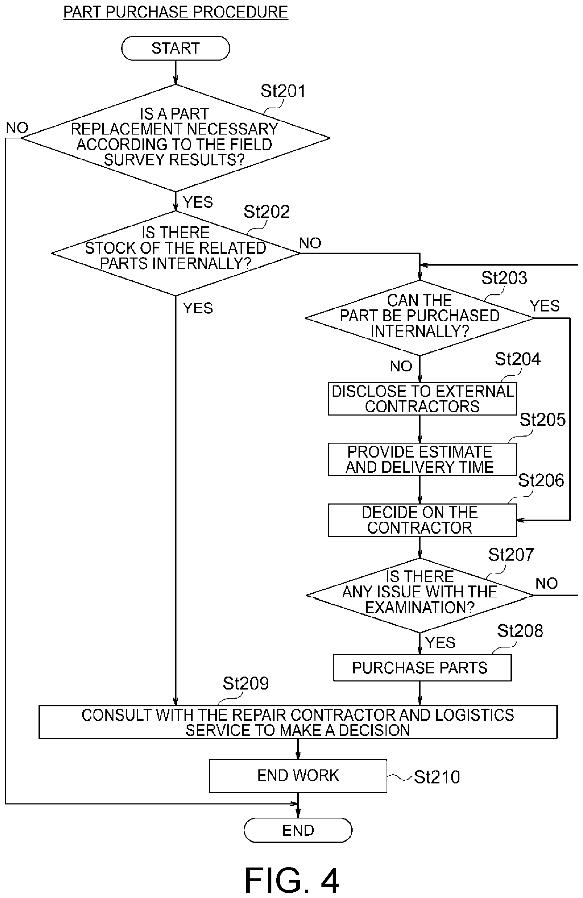

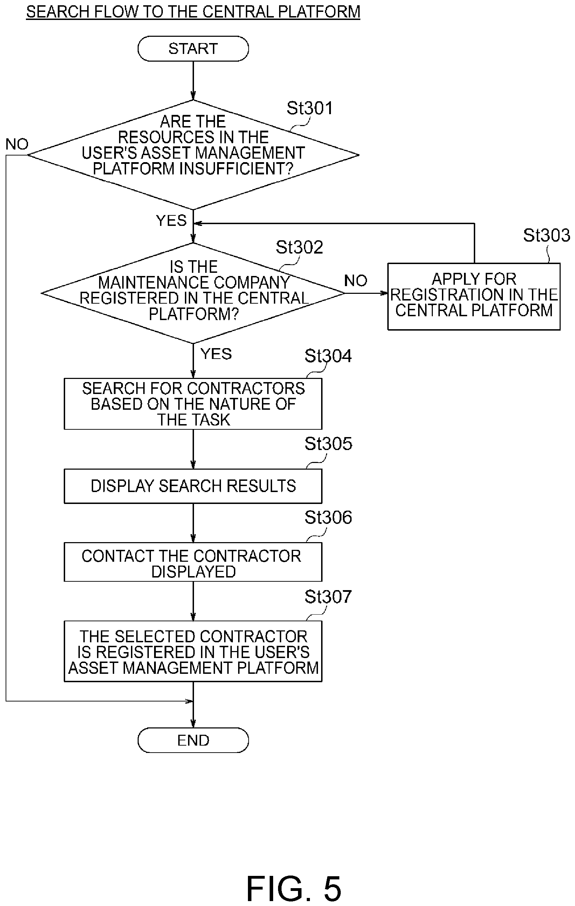

The following describes an embodiment of the present invention with reference to the drawings. FIG. 1 is a block diagram illustrating the configuration of a solar power plant management system 1 according to the present embodiment, and FIGS. 2 to 5 are flowcharts illustrating the operations performed when status survey work and repair work are conducted for a photovoltaic equipment 52 installed in a solar power plant 50 as part of the solar power plant management system 1 shown in FIG. 1. Specifically, FIG. 2 is a flowchart illustrating the on-site survey process for the photovoltaic equipment 52 installed in the solar power plant 50, FIG. 3 is a flowchart illustrating the on-site repair process, FIG. 4 is a flowchart illustrating the parts purchasing process in the solar power plant management system 1, and FIG. 5 is a flowchart illustrating the search process to the central platform in the solar power plant management system 1.

As shown in FIG. 1, the solar power plant management system 1 according to this embodiment includes an asset management platform 10, a central platform 40, the solar power plant 50, and a data processing platform 70. The asset management platform 10 manages the solar power plant 50 and is installed in correspondence with the solar power plant 50. The asset management platform 10 is managed by the owner of the solar power plant 50, the maintenance company responsible for the solar power plant 50, the construction company that built the solar power plant 50, and the affiliates of these entities. The asset management platform 10 is communicatively connected to the corresponding central platform 40 and data processing platform 70. The central platform 40, on the other hand, is managed by the operators and administrators of the solar power plant management system 1, and is communicatively connected to multiple asset management platforms 10. In this embodiment, the central platform 40, data processing platform 70, and asset management platform 10 are each implemented as servers accessible via the internet, and are provided as virtual dedicated servers constructed within physical servers accessible via the internet. The details of each component of the solar power plant management system 1 are described in the following sections.

The solar power plant 50 includes photovoltaic equipment 52, such as solar panels, which is used for power generation. Information regarding the amount of power generated by the photovoltaic equipment 52 is collected by a data collection device 58. Additionally, the solar power plant 50 is equipped with a surveillance camera 54 that continuously captures images of the photovoltaic equipment 52, a failure detection sensor 56 that detects faults in the photovoltaic equipment 52, and the data collection device 58 that gathers data. The data collection device 58 collects information regarding images and videos of the photovoltaic equipment 52 captured by the surveillance camera 54. Furthermore, the data collection device 58 collects fault detection information for the photovoltaic equipment 52 provided by the failure detection sensor 56. The data collection device 58 is communicatively connected to the data processing platform 70, and the information it collects is transmitted to the data processing platform 70.

The data processing platform 70 is designed to process various types of data based on the information received from the data collection device 58. For example, if the data processing platform 70 detects that the amount of power generated by the photovoltaic equipment 52, as transmitted from the data collection device 58, remains below a predetermined threshold for a specified period, it concludes that an abnormality has occurred in the photovoltaic equipment 52. Furthermore, the data processing platform 70 determines that a fault has occurred in the photovoltaic equipment 52 if the difference between the images and videos of the photovoltaic equipment 52 transmitted from the data collection device 58 and those pre-stored in the data processing platform 70 exceeds a predetermined threshold. Additionally, when the data processing platform 70 receives fault detection information regarding the photovoltaic equipment 52 from the data collection device 58, it determines that a fault has occurred in the photovoltaic equipment 52. When the data processing platform 70 concludes that a fault has occurred in the photovoltaic equipment 52, it transmits fault information to the asset management platform 10.

The asset management platform 10 comprises a controller 12, a memory 30, and a network interface 32. The network interface 32 is configured to send and receive signals to and from the solar power plant 50, the central platform 40, a user terminal 60, a maintenance company terminal 62, and a component company terminal 64 corresponding to the asset management platform 10, via a communication network such as the internet. The controller 12, comprising a CPU and related components, controls the operation of the asset management platform 10. Specifically, the controller 12 executes various programs stored in the memory 30 and functions as a reception unit 14, abnormality detection unit 16, transmission unit 18, calculation unit 20, sorting unit 22, and selection unit 24.

The reception unit 14 is configured to receive various types of information transmitted from the solar power plant 50, central platform 40, user terminal 60, maintenance company terminal 62, and component company terminal 64 associated with the asset management platform 10. The abnormality detection unit 16 is configured to detect that an abnormality has occurred in the photovoltaic equipment 52 when the reception unit 14 receives abnormality information from the data processing platform 70. The transmission unit 18 is configured to transmit various types of information to the solar power plant 50, central platform 40, user terminal 60, maintenance company terminal 62, and component company terminal 64 associated with the asset management platform 10.

The calculation unit 20 is configured to calculate the total loss amount for each maintenance company based on the cost required for inspecting and repairing the photovoltaic equipment 52 of the solar power plant 50, as well as the loss incurred due to the inability to generate power during the inspection and repair of the photovoltaic equipment 52. The sorting unit 22 is configured to sort the maintenance companies based on the total loss amount calculated by the calculation unit 20. The selection unit 24 is configured to select the appropriate maintenance company or similar entity for inspecting and repairing the photovoltaic equipment 52. The functions of the reception unit 14, abnormality detection unit 16, transmission unit 18, calculation unit 20, sorting unit 22, and selection unit 24 will be described in detail below.

The memory 30 stores the history of electricity generation by the photovoltaic equipment 52 of the solar power plant 50 associated with the asset management platform 10, the history of failure occurrence information for the photovoltaic equipment 52, information about the owner of the solar power plant 50, the history of status survey work and repair work for the photovoltaic equipment 52, the management authority of the asset management platform 10, and related data. Additionally, the memory 30 contains a list of maintenance companies capable of conducting condition surveys and performing repair work on the photovoltaic equipment 52 of the solar power plant 50, as well as a list of parts necessary for repair work on the photovoltaic equipment 52.

Furthermore, the programs executed by the controller 12 are not limited to those stored in the memory 30. The controller 12 may also function as the reception unit 14, abnormality detection unit 16, transmission unit 18, calculation unit 20, sorting unit 22, and selection unit 24 by executing programs transmitted to the asset management platform 10 from external devices such as a management server.

Next, the structure of the central platform 40 is explained using FIG. 1. The central platform 40 is equipped with a controller 42, memory 43, maintenance company database 44, component database 46, and network interface 48. The network interface 48 facilitates the transmission and reception of signals to and from each of the multiple asset management platforms 10 corresponding to each solar power plant 50 via a communication network such as the internet. The controller 42, composed of a CPU, controls the operation of the central platform 40. The memory 43 stores account information for the asset management platform 10 linked to the central platform 40, along with a history of the power generation data from the photovoltaic equipment 52 of the solar power plant 50 corresponding to the asset management platform 10, a history of failure occurrences in the photovoltaic equipment 52, information about the owner of the solar power plant 50, a history of investigations into the status of the photovoltaic equipment 52 and repair work, management authority for the asset management platform 10, and more. The maintenance company database 44 contains a list of maintenance companies nationwide capable of performing status surveys and repair work on the photovoltaic equipment 52 of the solar power plant 50. Similarly, the component database 46 holds a list of parts, which can be supplied by parts companies worldwide, necessary for repair work on the photovoltaic equipment 52. When the controller 42 of the central platform 40 receives a request for information from the asset management platform 10, it allows the asset management platform 10 to access part or all of the list of maintenance companies stored in the maintenance company database 44, or part or all of the list of parts stored in the component database 46. These parts are required for the repair of the photovoltaic equipment 52 and are provided by parts companies worldwide. For example, the asset management platform 10 can download part or all of these lists.

In addition, the asset management platform 10 is communicatively connected to the user terminal 60, maintenance company terminal 62, and component company terminal 64. These terminals 60, 62, and 64 consist of portable devices such as smartphones, PC tablets, and personal computers installed in maintenance companies or component companies. In this embodiment, various types of information are exchanged between the asset management platform 10 and the user terminal 60, maintenance company terminal 62, and component company terminal 64.

Next, the operation of registering the asset management platform 10 with the central platform 40 in the solar power plant management system 1 of this embodiment will be described.

The owner of the asset management platform 10 sends a command to the controller 12 of the asset management platform 10 to link it with the central platform 40. This command can be issued, for example, by sending a directive from the terminal (not shown) of the owner of the asset management platform 10 to the central platform 40, or by entering a directive on the website of the asset management platform 10 to establish a link with the central platform 40. When the reception unit 14 of the asset management platform 10 receives the command to link with the central platform 40, it transmits information related to the linking request to the central platform 40. Upon receiving the linking request from the asset management platform 10, the controller 42 of the central platform 40 links with the asset management platform 10 after receiving approval for the linking from the administrator of the central platform 40. Specifically, the central platform 40 issues an account for the asset management platform 10 and sends this account to the asset management platform 10. This process enables the asset management platform 10 and the central platform 40 to establish a link. Once the asset management platform 10 and the central platform 40 are linked, various types of information stored in the memory 30 of the asset management platform 10 are transmitted to the central platform 40, and backup information for the asset management platform 10 is stored in the memory 43 of the central platform 40. As a result, even if the system of the asset management platform 10 goes down, the data stored in the memory 30 of the asset management platform 10 can be restored using the data transmitted from the central platform 40. Additionally, information regarding maintenance companies, component companies, and parts stored in the memory 30 of the asset management platform 10 is sent to the central platform 40 and stored in the maintenance company database 44 and component database 46 of the central platform 40. By consolidating the information on maintenance companies, component companies, and parts registered in the memory 30 of asset management platforms 10 across the country in the central platform 40, it becomes possible, as described below, to share this information among multiple asset management platforms 10.

Next, the operation of the solar power plant management system 1 of this embodiment, when the status survey work and repair work of the photovoltaic equipment 52 of the solar power plant 50 are performed, will be explained using the flowcharts shown in FIGS. 2 to 5. The operations described below are executed by the controller 12 of the asset management platform 10, which runs the program stored in the memory 30 and functions as the reception unit 14, abnormality detection unit 16, transmission unit 18, calculation unit 20, sorting unit 22, and selection unit 24.

First, the operation of the solar power plant management system 1 of this embodiment, when conducting the status survey work for the photovoltaic equipment 52 of the solar power plant 50, will be explained using the on-site status survey workflow shown in FIG. 2.

When the data processing platform 70 receives abnormal information about the photovoltaic equipment 52 transmitted to it by the asset management platform 10 (Step St1 "YES"), the data processing platform 70 transmits the abnormal information about the photovoltaic equipment 52 to the user's asset management platform 10 (Step St2). At the data processing platform 70, when the reception unit 14 receives the abnormality information and the abnormality detection unit 16 detects an abnormality in the photovoltaic equipment 52, the abnormality information for the photovoltaic equipment 52 is sent to the user terminal 60. As a result, the owner of the photovoltaic equipment 52 can learn about the abnormality using the user terminal 60. Additionally, when the abnormality detection unit 16 detects an abnormality in the photovoltaic equipment 52, it is determined whether the company that owns the data processing platform 70 has the internal capacity to handle the situation investigation (Step St3). Specifically, the memory 30 of the asset management platform 10 stores information on whether the internal system of the company owning the data processing platform 70 can handle such investigation tasks. Based on this stored information, it is determined whether the internal system can address the issue. In this case, memory 30 also stores the types of situation investigation work that the company's internal system is capable of handling. When the abnormality detection unit 16 detects an abnormality in the photovoltaic equipment 52, the relevant types of investigation tasks are notified to the user terminal 60. Using this information, the user terminal 60 can send a command to the asset management platform 10 to determine whether the investigation will be handled internally by the company. If the internal system of the company owning the data processing platform 70 is unable to respond (Step St3 "NO"), the first level of authority is granted, and specific information is disclosed to external contractors registered in advance with the user's asset management platform 10 (Step St4). The scope of disclosed information is determined based on the level of authority granted to the external contractor. For example, until the contractor is confirmed, only a limited portion of the information related to the solar power plant 50 and the photovoltaic equipment 52 is disclosed to the external contractor based on the first-level authority.

Specifically, the controller 12 displays information about the recruitment for the status survey work of the photovoltaic equipment 52 on the asset management platform 10 website. This recruitment information includes the installation location of the solar power plant 50, the specific specifications of the photovoltaic equipment 52, the date and time when an abnormality in the photovoltaic equipment 52 was detected by the abnormality detection unit 16, and the history of past status survey work and repair work for the photovoltaic equipment 52, among other details. As noted above, only a portion of the information related to the solar power plant 50 and photovoltaic equipment 52 is displayed on the asset management platform 10 website. Additionally, information about the recruitment for the status survey work of photovoltaic equipment 52 is sent to the maintenance company terminals 62 stored in memory 30. This allows maintenance companies that have received the recruitment information to apply for the status survey work for the photovoltaic equipment 52 via the asset management platform 10 website. The application information includes the schedule for performing the status survey work on the photovoltaic equipment 52, the costs required for the work, the number of workers needed to perform the survey, the qualifications of those workers, and company information about the maintenance company (Step St5).

In this embodiment, the maintenance companies eligible for recruitment are determined based on the location information of the solar power plant 50 equipped with the photovoltaic equipment 52 and the location information of each maintenance company. Recruitment information for the condition survey work is then transmitted to the selected maintenance companies by the transmission unit 18. Specifically, for example, maintenance companies located within a specified distance from the solar power plant 50 that has photovoltaic equipment 52 requiring condition survey work, or maintenance companies within a specified travel time from the solar power plant 50 with photovoltaic equipment 52 requiring condition survey work, are selected as eligible maintenance companies. Recruitment information for the condition survey work is then sent to these selected maintenance companies by the transmission unit 18.

When the reception unit 14 receives information (specifically, applications for the condition survey work) from each maintenance company, the calculation unit 20 calculates the total loss amount for each maintenance company based on the cost required for inspecting the photovoltaic equipment 52 of the solar power plant 50 and the loss incurred due to the inability to generate power during the inspection. For example, if three days elapse from when an abnormality in the photovoltaic equipment 52 is detected by the abnormality detection unit 16 to the date the maintenance company is scheduled to conduct the condition survey work according to its application, the calculation unit 20 calculates the total loss amount based on the inspection cost quoted by the maintenance company and the loss incurred from three days of non-generation due to the photovoltaic equipment 52. Additionally, when calculating the total loss amount, the calculation unit 20 may also factor in losses resulting from reduced power generation caused by the abnormality in the photovoltaic equipment 52. The controller 12 displays information about the applications for the condition survey work submitted by each maintenance company on the asset management platform 10 website. At this time, the maintenance companies are reordered based on the total loss amounts calculated by the calculation unit 20, and the reordered maintenance companies are displayed on the asset management platform 10 website in order. The owner of the solar power plant 50 selects one maintenance company from those listed on the website (specifically, from the maintenance companies that have applied for the condition survey work) using the selection unit 24 (Step St6). This selection determines the contractor for the condition survey work. Furthermore, the selected maintenance company may be granted a second level of authority as necessary (Step St7). After the contractor is confirmed, the second level of authority allows the external contractor access to more detailed information about the solar power plant 50 and the photovoltaic equipment 52 than the first level of authority. For instance, when the first level of authority is granted, only general information about the specifications of the photovoltaic equipment 52 and a summarized history of past condition survey and repair work is disclosed. However, when the second level of authority is granted, detailed information about the specifications and a comprehensive history of past condition survey and repair work is made available. Specifically, while the blueprints for the solar power plant 50 and photovoltaic equipment 52 are not disclosed under the first level of authority, they are provided to the external contractor under the second level of authority. This additional information enables the external contractor performing the condition survey work to access more detailed data than what is disclosed during the application process, allowing the contractor to conduct the condition survey work more effectively.

The controller 12 then requests the maintenance company selected by the selection unit 24 to perform the condition survey work and concludes a contract with the company (Step St8). Specifically, the request information for the condition survey work of the photovoltaic equipment 52 of the solar power plant 50 is transmitted to the terminal 62 of the selected maintenance company by the transmission unit 18. During this process, the sorting unit 22 reorders the maintenance companies based on the total loss amount calculated by the calculation unit 20, ensuring that maintenance companies with smaller total loss amounts are displayed higher on the website. This allows the owner of the solar power plant 50 to more easily select a maintenance company with a smaller total loss amount.

After that, the company that owns the asset management platform 10 (Step St3 "YES") or the outsourced external company (Step St8) begins the on-site condition survey work (Step St9). When the condition survey work for the photovoltaic equipment 52 is performed, the workers of the company that owns the asset management platform 10 or the commissioned external company report the completion of the condition survey work to the asset management platform 10. This can be done by updating the report on the asset management platform 10 website or by sending an email with the report attached to the asset management platform 10. When the reception unit 14 of the asset management platform 10 receives the report from the maintenance company regarding the completion of the condition survey, the report content is displayed on the asset management platform 10 website. Consequently, the owner of the solar power plant 50 can check the report contents regarding the condition survey work displayed on the website of the asset management platform 10 (Step St10). Additionally, the report contents are saved in the memory 30 of the asset management platform 10 (Step St11). The report on the condition survey work includes information on whether any parts need to be replaced and, if so, details about the specific parts that require replacement. If the report submitted by the maintenance company indicates that repair work on the photovoltaic equipment 52 is unnecessary, the series of operations in the solar power plant management system 1 is concluded (Step St12). Conversely, if the report indicates that repair work on the photovoltaic equipment 52 is required, the repair work is carried out as described below. If the necessary repairs are minor, the maintenance company conducting the condition survey may perform the repairs during the inspection.

In addition, if the above-mentioned condition survey work cannot be carried out by the company's internal system or by an external contractor registered in the asset management platform 10, an inquiry will be made to the central platform. Details regarding such inquiries to the central platform will be described later.

The operation of the solar power plant management system 1 of this embodiment when performing repair work on the photovoltaic equipment 52 of the solar power plant 50 is explained using the on-site repair work flow shown in FIG. 3.

If it is determined that on-site repair work is necessary based on the contents of the condition survey report (Step St101 "YES"), it is assessed whether the internal system of the company that owns the data processing platform 70 can handle the repair work (Step St102). Specifically, the memory 30 of the asset management platform 10 stores information on whether the internal system of the company that owns the data processing platform 70 is capable of handling repair work, and based on the information stored in memory 30, it is determined whether the company's internal system can handle the repair work. At this time, the memory 30 also stores the types of repair work that can be handled by the internal system of the company that owns the data processing platform 70. When the abnormality detection unit 16 detects an abnormality in the photovoltaic equipment 52, the types of repair work that can be handled are notified to the user terminal 60 based on the information stored in memory 30. A command from the user terminal 60 to perform repair work using the company's internal system may be sent to the asset management platform 10, determining whether the company's internal system will respond. If the company's internal system that owns the data processing platform 70 is unable to handle the repair work (Step St102 "NO"), the first level of authority is granted, and information is disclosed to the external contractor registered in advance with the user's asset management platform 10 (Step St103). The information to be disclosed is determined based on the level of authority granted to the external contractor. For example, until the contractor is confirmed, only a portion of the information related to the solar power plant 50 and photovoltaic equipment 52 is disclosed to the external contractor under the first-level authority.

Specifically, the controller 12 displays information about the recruitment of repair work for the photovoltaic equipment 52 on the website of the asset management platform 10. This information includes the location of the solar power plant 50, the specific specifications of the photovoltaic equipment 52, the date and time when an abnormality in the photovoltaic equipment 52 was detected by the abnormality detection unit 16, and the history of past condition surveys and repair work for the photovoltaic equipment 52, among other details. As mentioned above, only a portion of the information about the solar power plant 50 and photovoltaic equipment 52 is displayed on the asset management platform 10 website. In addition, information about the recruitment for repair work on the photovoltaic equipment 52 is sent to the maintenance company terminal 62 stored in the memory 30. As a result, each maintenance company that receives this information can apply for the repair work of the photovoltaic equipment 52 through the asset management platform 10 website. The repair information includes the schedule for performing the repair work on the photovoltaic equipment 52, the cost required for the repair work, the number of workers involved in performing the repair work, the qualifications of the workers, and the company information of the maintenance company (Step St104). In this embodiment, the maintenance companies to be targeted for recruitment are determined based on the location information of the solar power plant 50 with the photovoltaic equipment 52 and the location information of each maintenance company. Information about the recruitment for repair work is then transmitted to the determined maintenance companies via the transmission unit 18. Specifically, for example, maintenance companies located within a specified distance from the solar power plant 50 requiring repair work, or maintenance companies whose travel time to the solar power plant 50 falls within a specified range, are identified as the target maintenance companies. Information about the recruitment for repair work is transmitted to these identified maintenance companies by the transmission unit 18.

When the reception unit 14 receives information about repair work (specifically, applications for repair work) from each maintenance company, the calculation unit 20 calculates the total loss amount for each maintenance company based on the cost required for repairing the photovoltaic equipment 52 of the solar power plant 50 and the amount of loss incurred due to the inability to generate power while the repair work is being carried out on the photovoltaic equipment 52. For example, if there are 10 days between the detection of an abnormality in the photovoltaic equipment 52 by the abnormality detection unit 16 and the scheduled date for repair work to be performed by a particular maintenance company as indicated in its application information, the calculation unit 20 calculates the total loss amount based on the cost required for the repair work by this maintenance company and the loss amount due to the inability to generate power for 10 days. When calculating the total loss amount, if the amount of power generated is reduced due to a problem with the photovoltaic equipment 52, the loss amount resulting from the reduced power generation may also be considered. The controller 12 displays information about the applications for repair work on the photovoltaic equipment 52 submitted by each maintenance company on the website of the asset management platform 10. In this process, the maintenance companies are sorted by the total loss amounts calculated by the calculation unit 20 using the sorting unit 22, and the sorted list is displayed on the asset management platform 10 website in ascending order of total loss. The owner of the solar power plant 50 then selects one of the maintenance companies listed on the website (specifically, the maintenance companies that applied for the repair work) using the selection unit 24 (Step St105). This finalizes the selection of the company to which the repair work will be outsourced. The maintenance company selected by the owner of the solar power plant 50 using the selection unit 24 is granted additional authority, referred to as the second authority (Step St106). Here, after the contractor is confirmed, the second authority granted to the external contractor provides more detailed information about the solar power plant 50 and photovoltaic equipment 52 compared to the first authority. For example, under the first authority, only general information about the specific specifications of the photovoltaic equipment 52 and the history of past condition surveys and repair work is disclosed. However, under the second authority, detailed information about the specific specifications of the photovoltaic equipment 52 and the history of past condition surveys and repair work is disclosed. This enables the external business operator performing the repair work to carry out the tasks more appropriately, as they receive more comprehensive information than is disclosed during the application stage.

The controller 12 then requests the maintenance company selected by the selection unit 24 to perform the repair work and concludes a contract (Step St107). Specifically, the request information for the repair work of the photovoltaic equipment 52 of the solar power plant 50 is transmitted to the terminal 62 of the selected maintenance company via the transmission unit 18. In this process, the sorting unit 22 rearranges the maintenance companies based on the total loss amount calculated by the calculation unit 20, and maintenance companies with smaller total loss amounts are displayed at the top of the website. As a result, the owner of the solar power plant 50 can easily select a maintenance company with a smaller total loss amount.

After that, the company that owns the asset management platform 10 (Step St102 "YES") or the outsourced external company (Step St107) begins the on-site repair work (Step St108). When the repair work for the photovoltaic equipment 52 is carried out, the workers of the company that owns the asset management platform 10 or the outsourced external company report the completion of the repair work to the asset management platform 10 by either updating the repair report on the asset management platform 10 website or sending an email with the report attached. When the reception unit 14 of the asset management platform 10 receives the completion report from the maintenance company, the report content is displayed on the asset management platform 10 website. This allows the owner of the solar power plant 50 to check the content of the repair work report displayed on the asset management platform 10 website (Step St109). Additionally, once the repair work is completed (Step St110), the report content is stored in the memory 30 of the asset management platform 10 (Step St111). In this manner, the repair work is completed (Step St112).

In addition, if the repair work mentioned above cannot be handled by the company's internal system or by the external contractor registered in the asset management platform 10, an inquiry is made to the central platform. Details of this type of inquiry to the central platform will be described later.

Next, the parts purchasing workflow required for the repair work mentioned above is explained with reference to FIG. 4.

If it is determined, based on the results of the on-site survey shown in the flowchart in FIG. 2, that parts replacement is necessary (Step St201 "YES"), a determination is made as to whether there is an internal inventory of the relevant parts at the company that owns the asset management platform 10 (Step St202). If the company that owns the asset management platform 10 has the relevant parts in stock (Step St202 "YES"), the parts to be used are decided through consultation with the repair contractor and the logistics company (Step St209). Conversely, if the company that owns the asset management platform 10 does not have the relevant parts in stock (Step St202 "NO"), a determination is made as to whether the parts can be procured internally (Step St203). If the parts cannot be procured internally (Step St203 "NO"), information regarding the purchase of the parts is disclosed to external contractors that have been registered in advance in the user's asset management platform 10 (Step St204). Specifically, information about the purchase of the parts is sent to the component company terminal 64 stored in memory 30. As a result, each component company that receives the purchase information presents an estimate for the parts and a delivery schedule via the asset management platform 10 website (Step St205).

Then, the subcontractor from which the parts are to be purchased is determined by the asset management platform 10 (Step St206). This determination may also be made by the user via the user terminal 60. Once the subcontractor for purchasing the parts has been decided, an evaluation of the subcontractor is conducted (Step St207). This evaluation includes either or both an external assessment by an insurance company and an internal assessment of whether the cost of the parts is reasonable. If no issues are found during the evaluation (Step St207 "YES"), the parts are purchased (Step St208). Subsequently, the parts to be used are decided through consultation with the repair service contractor and the logistics provider (Step St209). In this manner, the parts purchasing process is completed (Step St210).

If the parts required for replacement cannot be obtained from the parts company registered in the memory 30 of the asset management platform 10, the parts are procured through the parts EC site provided by the central platform 40, and the delivery location for the parts is specified. The list of parts available for purchase on the parts EC site provided by the central platform 40 is stored in the component database 46.

In addition, this section explains the case where the above-mentioned condition survey and repair work cannot be handled by the company's internal system or by an external contractor registered with the asset management platform 10. If the asset management platform 10 lacks sufficient resources (Step St301 "YES"), the transmission unit 18 of the asset management platform 10 sends a request for information provision to the central platform 40. If the asset management platform 10 is registered with the central platform 40 (Step St302 "YES"), the central platform 40 searches for a subcontractor based on the work content (Step St304). On the other hand, if the asset management platform 10 is not registered with the central platform 40 (Step St302 "NO"), a registration application must be submitted from the asset management platform 10 to the central platform 40 (Step St303). Once the asset management platform 10 is registered with the central platform 40, the central platform 40 conducts a search for subcontractors based on the work content, and the search results are sent to the asset management platform 10. When the search results are displayed on the asset management platform 10 website (Step St305), the asset management platform 10 can contact the subcontractors listed on the website (Step St306). In this way, the contractors identified through the search are stored in the memory 30 of the user's asset management platform 10 and registered with the asset management platform 10 (Step St307). This process enables the user to outsource work to the newly registered external contractors.

To explain in more detail, the asset management platform 10 will be able to check part or all of the list of maintenance companies stored in the maintenance company database 44 from the central platform 40. When the asset management platform 10 is able to check part of the list of maintenance companies stored in the maintenance company database 44 from the central platform 40, the asset management platform 10 is able to check information on a predetermined number of maintenance companies from the central platform 40 in order of proximity to the location where the solar power plant 50 is installed or in order of short travel time. This allows the controller 12 to request information from the central platform 40 and to check part or all of the list of maintenance companies stored in the maintenance company database 44 of the central platform 40, even if the asset management platform 10 does not have information stored in its memory 30 about the maintenance companies that can perform the photovoltaic equipment 52 status survey and repair work for the solar power plant 50 corresponding to this asset management platform 10. The controller 12 can reliably perform the photovoltaic equipment 52 condition survey and repair work.

According to the solar power plant management system 1 of this embodiment, which is composed of the components described above, the solar power plant management system 1 includes the solar power plant 50, which is equipped with photovoltaic equipment 52, and the asset management platform 10, which is provided in correspondence with the solar power plant 50. The asset management platform 10 includes the controller 12 that functions as the reception unit 14, the abnormality detection unit 16, and the transmission unit 18, by executing the program, and the memory 30 for storing information about maintenance companies. The solar power plant management system 1 further includes the central platform 40, which is communicatively connected to the asset management platform 10 and contains the maintenance company database 44. In the asset management platform 10, when the reception unit 14 receives abnormal information about the photovoltaic equipment 52 and the abnormality detection unit 16 detects an abnormality in the photovoltaic equipment 52, it is determined whether the asset management platform 10 can handle the status survey work for the photovoltaic equipment 52. If the asset management platform 10 is unable to handle the status survey work for the photovoltaic equipment 52, the transmission unit 18 sends a request for information provision from the asset management platform 10 to the central platform 40, and the information on maintenance companies capable of performing the work, which is stored in the central platform 40 database 44, can be accessed from the asset management platform 10. Thus, according to this solar power plant management system 1, if the asset management platform 10 is unable to handle the status survey work for the photovoltaic equipment 52, the transmission unit 18 sends a request for information provision from the asset management platform 10 to the central platform 40, and the asset management platform 10 can check the information on the maintenance companies that are capable of performing the work, stored in the maintenance company database 44 of the central platform 40. This eliminates the need to contact maintenance companies other than those stored in the memory 30 of the asset management platform 10, improving convenience.

Here, the determination of whether the asset management platform 10 can handle the status survey work for the photovoltaic equipment 52 means determining whether it can be handled by the internal system of the company that owns the data processing platform 70. If it cannot be handled by the internal system of the company, the determination is made as to whether it can be handled by the external contractors registered in the memory 30 of the asset management platform 10. Additionally, when the asset management platform 10 is unable to handle the status survey work for the photovoltaic equipment 52, this means that the internal system of the company that owns the data processing platform 70 cannot handle it, and the external contractors registered in the asset management platform 10's memory 30 are also unable to handle it. This embodiment is not limited to this scenario. In other variations, the decision as to whether the asset management platform 10 can handle the photovoltaic equipment 52 status survey work may be made by determining either whether it can be handled by the internal system of the company that owns the data processing platform 70, or whether it can be handled by an external contractor registered in the asset management platform 10's memory 30. Moreover, when the asset management platform 10 is unable to handle the status survey work for the photovoltaic equipment 52, this could be due to either the inability of the internal system of the company that owns the data processing platform 70 to handle it, or the inability of the external contractors registered in the asset management platform 10's memory 30 to handle it.

In the solar power plant management system 1 of this embodiment, information about the recruitment for the status survey work of the photovoltaic equipment 52 is displayed on the asset management platform 10 website. At this stage, the maintenance company to be recruited is selected based on the location information of the solar power plant 50, which houses the photovoltaic equipment 52, and the location information of each maintenance company. Additionally, when the selection unit 24 selects a maintenance company from among the multiple maintenance companies to perform the status survey work on the asset management platform 10 website, a request for the selected maintenance company to carry out the status survey work is sent to the selected maintenance company terminal 62 by the transmission unit 18. According to the solar power plant management system 1, maintenance companies that are located near the solar power plant 50, for example, are selected from the available maintenance companies. This enables the selection of a more suitable maintenance company to perform the status survey work.

In the solar power plant management system 1 of this embodiment, information regarding the recruitment of status survey work for the photovoltaic equipment 52 is displayed on the asset management platform 10 website. At this time, the calculation unit 20 calculates the total loss amount for each maintenance company based on the cost required for inspecting the photovoltaic equipment 52 and the loss incurred due to the inability to generate electricity during the inspection. The maintenance companies are then reordered based on the total loss amount calculated by the calculation unit 20, and they are displayed on the asset management platform 10 website in order, according to the reordering performed by the sorting unit 22. Additionally, on the asset management platform 10 website, when the selection unit 24 selects a maintenance company from among multiple maintenance companies to perform the status survey work, a request to assign the status survey work to the selected maintenance company is sent to the selected maintenance company terminal 62 by the transmission unit 18. According to the solar power plant management system 1, it becomes possible to select a maintenance company from among various maintenance companies using the selection unit 24, in such a way that the total loss amount is minimized, thereby optimizing the choice of maintenance company for the status survey work.

In addition, in the solar power plant management system 1 of this embodiment, when the reception unit 14 of the asset management platform 10 receives abnormal information regarding the photovoltaic equipment 52 and the abnormality is detected by the abnormality detection unit 16, information regarding the recruitment of the status survey work for the photovoltaic equipment 52 is displayed on the asset management platform 10 website. At this point, some information about the photovoltaic equipment 52 or the solar power plant 50 is made public by granting the first authority to the maintenance company that applies. On the website, when a maintenance company to conduct the status survey work is selected from multiple maintenance companies by the selection unit 24, a request to assign the status survey work to the selected maintenance company is sent to the selected maintenance company terminal 62 via the transmission unit 18. At this time, the selected maintenance company is granted the second authority, which provides access to more information than what was made available with the first authority regarding the photovoltaic equipment 52 or solar power plant 50. This allows more information to be provided to the external company performing the status survey work than what was disclosed during the application process, enabling them to carry out the tasks more appropriately.

In addition, in the solar power plant management system 1 of this embodiment, when determining whether the asset management platform 10 can handle the status survey work for the photovoltaic equipment 52, if the status survey work cannot be carried out by the owner of the asset management platform 10 or by the maintenance company stored in memory 30, it is determined that the asset management platform 10 cannot handle the status survey work for the photovoltaic equipment 52.

Furthermore, in the solar power plant management system 1 of this embodiment, information about the recruitment for the status survey work of the photovoltaic equipment 52 is displayed on the asset management platform 10 website. On this website, the maintenance company to perform the status survey work is selected from multiple maintenance companies by the selection unit 24.

Additionally, in the solar power plant management system 1 of this embodiment, when the reception unit 14 receives a report on the status survey work from the maintenance company that performed the survey, the report content is displayed on the asset management platform 10 website.

In addition, in the solar power plant management system 1 of this embodiment, when it is determined that repair of the photovoltaic equipment 52 is necessary in the asset management platform 10, it is judged whether the repair work for the photovoltaic equipment 52 can be handled by the asset management platform 10. If the repair work cannot be handled by the asset management platform 10, a request for information provision is sent from the asset management platform 10 to the central platform 40 via the transmission unit 18, and information about maintenance companies that can perform the work, stored in the central platform 40's database 44, can be accessed from the asset management platform 10. According to the solar power plant management system 1, if the repair work for the photovoltaic equipment 52 cannot be handled by the asset management platform 10, the transmission unit 18 sends a request for information provision to the central platform 40 from the asset management platform 10. Information about the maintenance companies capable of performing the work, which is stored in the central platform 40's database 44, can then be checked from the asset management platform 10, thereby eliminating the need to contact maintenance companies other than those stored in the asset management platform 10's memory 30. This improves convenience.

Here, the determination of whether the repair work for the photovoltaic equipment 52 can be handled by the asset management platform 10 means that it is assessed whether or not it can be handled by the internal system of the company that owns the data processing platform 70. If the internal system of the company that owns the data processing platform 70 cannot handle it, then it is assessed whether or not it can be handled by the external contractors registered in the memory 30 of the asset management platform 10. Furthermore, when the repair work for the photovoltaic equipment 52 cannot be handled by the asset management platform 10, it means that it is not possible to handle it using the internal system of the company that owns the data processing platform 70, and it is also not possible to handle it by the external contractors registered in the memory 30 of the asset management platform 10. This embodiment is not limited to this situation. In other embodiments, the decision on whether the repair work for the photovoltaic equipment 52 can be handled by the asset management platform 10 may be based on either the ability of the internal system of the company that owns the data processing platform 70 to handle the work or the ability of an external contractor registered in the memory 30 of the asset management platform 10 to handle it. Additionally, when the repair work for photovoltaic equipment 52 cannot be handled by the asset management platform 10, it may be due to the internal system of the company that owns the data processing platform 70 being unable to handle it, or it may be because the external contractors registered in the memory 30 of the asset management platform 10 are unable to handle it.

In the solar power plant management system 1 of this embodiment, information regarding the recruitment of repair work for the photovoltaic equipment 52 is displayed on the website of the asset management platform 10. At this time, the maintenance company to be recruited is determined based on the location information of the solar power plant 50, which houses the photovoltaic equipment 52, and the location information of each maintenance company. Additionally, on the asset management platform 10 website, when a maintenance company is selected from among multiple maintenance companies by the selection unit 24 to perform the repair work, a request to have the selected maintenance company perform the repair work is sent to the selected maintenance company terminal 62 via the transmission unit 18. According to the solar power plant management system 1, the maintenance company closest to the location of the solar power plant 50 is selected from among various maintenance companies, allowing the selection of a more appropriate maintenance company to carry out the repair work.

In addition, in the solar power plant management system 1 of this embodiment, information regarding the recruitment of repair work for the photovoltaic equipment 52 is displayed on the website of the asset management platform 10. At this time, the calculation unit 20 calculates the total loss amount for each maintenance company based on the cost required for repairing the photovoltaic equipment 52 and the loss amount due to the inability to generate power during the repair of the photovoltaic equipment 52. The maintenance companies are reordered based on the total loss amount calculated by the calculation unit 20, and the maintenance companies are displayed in order on the asset management platform 10 website, as sorted by the sorting unit 22. Additionally, when the maintenance company to perform the repair work is selected from among multiple maintenance companies on the asset management platform 10 website by the selection unit 24, a request for the selected maintenance company to perform the repair work is sent to the selected maintenance company terminal 62 via the transmission unit 18. According to the solar power plant management system 1, the selection unit 24 can be used to choose a maintenance company from among various options that minimizes the total loss amount, allowing the repair work to be assigned accordingly.

In addition, in the solar power plant management system 1 of this embodiment, when it is determined that repair work for the photovoltaic equipment 52 is necessary in the asset management platform 10, information regarding the recruitment of repair work for the photovoltaic equipment 52 is displayed on the asset management platform 10 website. At this point, the maintenance company that applies is granted the first authority, and some of the information regarding the photovoltaic equipment 52 or the solar power plant 50 is made public. When the maintenance company to perform the repair work is selected from among multiple maintenance companies by the selection unit 24 on the website, a request for the selected maintenance company to perform the repair work is sent to the selected maintenance company terminal 62 via the transmission unit 18. At this point, the selected maintenance company is granted the second authority, and more information than that made public by the first authority regarding the photovoltaic equipment 52 or the solar power plant 50 is provided. As a result, more information than what is made public when applying is provided to the external contractor performing the repair work, enabling these operations to be performed more appropriately.

In addition, in the solar power plant management system 1 of this embodiment, when determining whether the asset management platform 10 can handle the repair work for the photovoltaic equipment 52, if the repair work cannot be performed by either the owner of the asset management platform 10 or a maintenance company stored in the memory 30, it is determined that the asset management platform 10 cannot handle the repair work for the photovoltaic equipment 52.

In addition, in the solar power plant management system 1 of this embodiment, information regarding the recruitment of repair work for photovoltaic equipment 52 is displayed on the website of the asset management platform 10. On this website, the maintenance company that will perform the repair work is selected from among multiple maintenance companies by the selection unit 24.

In addition, in the solar power plant management system 1 of this embodiment, when the reception unit 14 receives a report regarding the repair work from the maintenance company that performed the repair work, the content of the report is displayed on the website of the asset management platform 10.

Furthermore, the machine management system of this embodiment is not limited to the solar power plant management system 1 that includes photovoltaic equipment 52, the solar power plant 50, the asset management platform 10 set up in relation to the solar power plant 50, and the central platform 40 that is communicably connected to each asset management platform 10. As an alternative to the solar power plant management system 1, a machine management system may be used, which includes machine equipment, an asset management platform that has a controller functioning as a reception unit, abnormality detection unit, and transmission unit by executing a program and a memory storing information about the maintenance company, and a central platform connected to multiple asset management platforms in a communicable manner, which contains a maintenance company database. In this case, when the reception unit receives abnormality information for the machine equipment in the asset management platform, and the abnormality detection unit detects abnormalities in the machine equipment, it is determined whether the asset management platform can handle the status survey work for the machine equipment. If the asset management platform cannot handle the status survey work, the transmission unit sends a request for information provision from the asset management platform to the central platform, and the asset management platform can then check the information about maintenance companies capable of performing the work, which is stored in the central platform's database. According to this type of machine management system, if the asset management platform cannot handle the task of investigating the machine equipment's status, the transmission unit sends the request for information provision to the central platform, and the asset management platform can access the information about maintenance companies capable of performing the task, stored in the central platform's database. This eliminates the need to contact maintenance companies other than those stored in the asset management platform's memory, thereby improving convenience.

In addition, in such an asset management platform, when the reception unit receives abnormality information about the machine equipment and the abnormality detection unit detects the abnormalities in the machine equipment, information regarding the recruitment for the machine equipment condition survey work is displayed on the asset management platform's website. Based on the location information of the machine equipment and the location information of each maintenance company, the maintenance company to be recruited for the condition survey work is selected from among the multiple maintenance companies by the selection unit on the website. A request to perform the condition survey work is then transmitted to the terminal of the selected maintenance company by the transmission unit. In this case, the maintenance companies selected for the condition survey work can be narrowed down to those located close to the machine equipment requiring the condition survey work, for example.

In addition, when the reception unit receives abnormality information about the machine equipment and the abnormality detection unit detects a malfunction in the machine equipment, information regarding the recruitment for the condition survey work for the machine equipment is displayed on the website of the asset management platform. At this time, some of the information about the machine equipment is made public by granting the first level of authority to the maintenance company that applies. On the website, when the selection unit selects a maintenance company from among multiple maintenance companies to carry out the condition survey work, a request to commission the selected maintenance company is sent to the selected maintenance company's terminal by the transmission unit. At this time, the selected maintenance company is granted the second level of authority, providing it with more information about the machine equipment than what was made public under the first level of authority. As a result, the external business operator performing the condition survey work is provided with more information than was disclosed during the application process, allowing the external business operator to perform the condition survey work more effectively.

As a machine management system, it is equipped with machine equipment, an asset management platform that has a controller functioning as a reception unit, abnormality detection unit, and transmission unit by executing a program and a memory storing information about the maintenance company, and a central platform connected to multiple asset management platforms in a communicable manner, which contains a maintenance company database. In this case, when the reception unit receives abnormality information for the machine equipment in the asset management platform, and the abnormality detection unit detects abnormalities in the machine equipment, it is determined whether the asset management platform can handle the status survey work for the machine equipment. The determination is made whether or not the asset management platform can handle the repair work for the machine equipment If the asset management platform is unable to handle the repair work for the machine equipment, the transmission unit sends a request for information provision from the asset management platform to the central platform. The information about maintenance companies that can perform the work, stored in the central platform's database, can be accessed from the asset management platform. According to this machine management system, if the asset management platform is unable to handle the repair work for the machine equipment, the transmission unit sends a request for information provision from the asset management platform to the central platform. The asset management platform can then access information about the maintenance companies that can perform the work, stored in the central platform's database, eliminating the need to contact maintenance companies other than those stored in the asset management platform's memory, thus improving convenience.

In addition, when it is determined that the repair of the machine equipment is necessary on such an asset management platform, information regarding the recruitment for repair work of the machine equipment is displayed on the asset management platform's website. At this time, the maintenance companies to be recruited are determined based on the location information of the machine equipment and the location information of each maintenance company. When the maintenance company selected to perform the repair work is chosen from among the multiple maintenance companies by the selection unit on the website, a request to have the selected maintenance company perform the repair work is sent to the selected maintenance company's terminal by the transmission unit. In this case, the maintenance companies eligible for recruitment can be narrowed down to those located near the machine equipment that requires repair, for example.

When it is determined that the repair of the machine equipment is necessary on the asset management platform, information regarding the recruitment for repair work on the machine equipment is displayed on the asset management platform's website. At this time, some information regarding the machine equipment is made public by granting the maintenance company applying for the work the first level of authority. On the website, when the selection unit selects a maintenance company from among the multiple maintenance companies to perform the repair work, a request for the selected maintenance company to carry out the repair work is sent to the maintenance company's terminal via the transmission unit. At this time, the selected maintenance company is granted the second level of authority, providing it with more information than what is made public by the first level of authority. In this case, more information than what is disclosed when applying is conveyed to the external business performing the repair work, enabling the external business to carry out the repair work more appropriately.

## Claims

1. A solar power plant management system comprising:
a solar power plant having photovoltaic equipment;
an asset management platform provided in response to the solar power plant, the asset management platform including a controller functioning as a reception unit, an abnormality detection unit, and a transmission unit by executing a program, and a memory storing information about maintenance companies; and
a central platform that is communicatively connected to a plurality of the asset management platforms and has a maintenance company database; wherein
in the asset management platform, when the reception unit receives abnormality information regarding the photovoltaic equipment and the abnormality detection unit detects an abnormality in the photovoltaic equipment, it is determined whether the asset management platform can handle the status survey work for the photovoltaic equipment. If the asset management platform is unable to handle the status survey work for the photovoltaic equipment, information regarding the request for information provision from the asset management platform to the central platform is transmitted by the transmission unit, and information about the maintenance companies capable of performing the work, stored in the database of the central platform, can be confirmed from the asset management platform.

2. The solar power plant management system according to Claim 1, wherein
when determining whether the asset management platform can handle the status survey work for the photovoltaic equipment, if the status survey work cannot be performed by the owner of the asset management platform or by the maintenance company stored in the memory, it is determined that the asset management platform cannot handle the status survey work for the photovoltaic equipment.

3. The solar power plant management system according to Claim 1, wherein
information regarding the recruitment of the status survey work for the photovoltaic equipment is displayed on the website of the asset management platform, and on the website, the maintenance company to perform the status survey work is selected from among multiple maintenance companies.

4. The solar power plant management system according to Claim 1, wherein
when the reception unit receives a report from the maintenance company that has conducted the status survey work, the content of the report is displayed on the website of the asset management platform.

5. The solar power plant management system according to any one of Claims 1 to 4, wherein
when it is determined that repair of the photovoltaic equipment is required on the asset management platform, it is determined whether or not the asset management platform can handle the repair work for the photovoltaic equipment. If the asset management platform cannot handle the repair work, information regarding the request for information provision from the asset management platform to the central platform is transmitted via the transmission unit, and the information about maintenance companies that can perform the work, stored in the central platform's database, can be accessed from the asset management platform.

6. The solar power plant management system according to Claim 5, wherein
when determining whether the asset management platform can handle the repair work for the photovoltaic equipment, if the repair work cannot be performed by the owner of the asset management platform or by the maintenance company stored in the memory, it is determined that the asset management platform is unable to handle the repair work for the photovoltaic equipment.

7. The solar power plant management system according to Claim 5, wherein
information about the recruitment of repair work for the photovoltaic equipment is displayed on the asset management platform's website, and on said website, the maintenance company is selected from among multiple maintenance companies to perform the repair work.

8. The solar power plant management system according to Claim 5, wherein
when the reception unit receives a report concerning the repair work from the maintenance company that performed the repair work, the content of the report is displayed on the asset management platform's website.

9. A solar power plant management system comprising:
a solar power plant having photovoltaic equipment;
an asset management platform provided in response to the solar power plant, the asset management platform including a controller functioning as a transmission unit by executing a program, and a memory storing information about maintenance companies;
a central platform that is connected to the plurality of the asset management platforms in a way that allows communication and has a maintenance company database; wherein
in the asset management platform, it is determined whether or not the repair work for the photovoltaic equipment can be handled by the asset management platform, if the repair work for the photovoltaic equipment cannot be handled by the asset management platform, information regarding the request for provision of information is transmitted from the asset management platform to the central platform by the transmission unit, and information regarding the maintenance companies that can perform the work, which is stored in the database of the central platform, can be accessed from the asset management platform.

10. An asset management platform provided in correspondence with a solar power plant having photovoltaic equipment, comprising:
a controller configured to function as a reception unit, abnormality detection unit, and transmission unit by executing the program; and
a memory that stores information about maintenance companies; wherein
when the reception unit receives abnormal information about the photovoltaic equipment and the abnormality detection unit detects an abnormality in the photovoltaic equipment, it is determined whether the asset management platform can handle the task of investigating the status of the photovoltaic equipment. If the task cannot be handled by the asset management platform, information regarding the request for information provision from the asset management platform is transmitted to the central platform, which has the maintenance company database, via the transmission unit, and information about maintenance companies capable of performing the task, stored in the database of the central platform, can be checked from the asset management platform.

11. An asset management platform provided in correspondence with a solar power plant that has photovoltaic equipment, comprising:
a controller configured to function as a transmission unit by executing the program; and
a memory that stores information about maintenance companies; wherein
the asset management platform determines whether or not the repair work for the photovoltaic equipment can be handled by the asset management platform, and if the repair work for the photovoltaic equipment cannot be handled by the asset management platform, the asset management platform sends information regarding the request for information provision to the central platform, which has the maintenance company database, via the transmission unit, and the information about maintenance companies that can perform the work, stored in the database of the central platform, can be checked from the asset management platform.

12. A program in which the controller of the asset management platform provided in correspondence with a solar power plant having photovoltaic equipment functions as a reception unit, an abnormality detection unit, and a transmission unit by being executed by the controller, wherein
when the reception unit receives abnormal information about the photovoltaic equipment and the abnormality detection unit detects an abnormality in the photovoltaic equipment, it is determined whether or not the asset management platform can handle the status survey work for the photovoltaic equipment, and if the status survey work cannot be handled by the asset management platform, information regarding the request for information provision from the asset management platform is sent to the central platform, which has the maintenance company database, via the transmission unit, and information about maintenance companies that can perform the work, stored in the central platform's database, can be confirmed from the asset management platform.

13. A program in which the controller of the asset management platform provided in response to a solar power plant with photovoltaic equipment, functions as a transmission unit by executing the controller, wherein
it is determined whether the repair work for the photovoltaic equipment can be handled by the asset management platform, and if the repair work for the photovoltaic equipment cannot be handled by the asset management platform, information regarding the request for information provision is transmitted from the asset management platform to the central platform, which has the maintenance company database, via the transmission unit, and information about the maintenance companies that can perform the work, stored in the database of the central platform, can be confirmed from the asset management platform.

14. A machine management system, comprising:
machine equipment;
an asset management platform provided in correspondence with the machine equipment, the asset management platform having a controller that functions as a reception unit, abnormality detection unit, and transmission unit by executing a program, and a memory that stores information about maintenance companies; and
a central platform that is communicatively connected to a plurality of the asset management platforms and has a maintenance company database; wherein
in the asset management platform, when the reception unit receives abnormal information about the machine equipment and the abnormality detection unit detects an abnormality in the machine equipment, it is determined whether or not the asset management platform can handle the investigation of the status of the machine equipment. If the asset management platform cannot handle the investigation work, the transmission unit sends information regarding the request for information provision from the asset management platform to the central platform, and the asset management platform can check the information about maintenance companies that can perform the work, which is stored in the database of the central platform.

15. A machine management system, comprising:
machine equipment;
an asset management platform provided in correspondence with the machine equipment, which includes a controller that functions as a reception unit, abnormality detection unit, and transmission unit by executing a program, and a memory that stores information about maintenance companies; and
a central platform that is communicatively connected to the plurality of the asset management platforms and has a maintenance company database; wherein
it is determined whether or not the repair work for the machine equipment can be handled by the asset management platform. If the repair work for the machine equipment cannot be handled by the asset management platform, information regarding the request for information provision is transmitted from the asset management platform to the central platform via the transmission unit, and the information about the maintenance companies that can perform the work, stored in the database of the central platform, can be checked from the asset management platform.

16. An information processing method performed by a solar power plant management system comprising a solar power plant with photovoltaic equipment, an asset management platform corresponding to the solar power plant, which includes a controller functioning as a reception unit, abnormality detection unit, and transmission unit by executing a program, and a memory that stores information about maintenance companies, and a central platform communicatively connected to multiple asset management platforms and having a maintenance company database, comprising:
determining whether the asset management platform can handle the task of investigating the status of the photovoltaic equipment when the reception unit receives abnormal information about the photovoltaic equipment and the abnormality detection unit detects an abnormality in the photovoltaic equipment;
if the asset management platform cannot handle the situation survey work for the photovoltaic equipment, transmitting information about the request for information provision from the asset management platform to the central platform via the transmission unit; and
checking information about maintenance companies that can perform the work, stored in the database of the central platform, from the asset management platform.

17. An information processing method performed by a solar power plant management system comprising a solar power plant with photovoltaic equipment, an asset management platform corresponding to the solar power plant, which includes a controller functioning as a transmission unit by executing a program, and a memory that stores information about maintenance companies, and a central platform communicatively connected to multiple asset management platforms and having a maintenance company database, comprising:
determining whether or not the repair work for the photovoltaic equipment can be handled by the asset management platform;
if the repair work for the photovoltaic equipment cannot be handled by the asset management platform, transmitting information about a request for information provision from the asset management platform to the central platform via the transmission unit, and
checking the information about the maintenance companies that can perform the work, stored in the database of the central platform, from the asset management platform.
